# FASCICULE DE BREVET EUROPEEN

(11) **EP 0 847 873 B1**
(45) Date de publication et mention de la délivrance du brevet: **24.01.2001**
(21) Numéro de dépôt: 97403014.0
(22) Date de dépôt: 11.12.1997
(51) Int. Cl.: B42C 7/00, B29C 65/00

(54) **Procédé de fabrication de fournitures de bureau telles que des protège-documents et dispositif de fabrication correspondant**
Vorrichtung und Verfahren zum Herstellen von Bürobedarf wie Schutzmappen
Method and device for realising office implements such as file protectors

(30) Priorité: 11.12.1996 FR 9615233
(43) Date de publication de la demande: 17.06.1998
(73) Titulaire: Avery Dennison France, 93420 Villepinte (FR)
(72) Inventeur: Mailleuchet, Michel, 10440 La Rivière De Corps (FR)
(74) Mandataire: Derambure, Christian

(56) Documents cités:
- WO-A-90/08100
- GB-A- 2 066 152
- US-A- 5 022 109
- US-A- 5 242 522

## Description

L'invention est relative à un procédé de fabrication de fournitures de bureau telles que des protège-documents, comportant au moins une étape de soudage par ultrasons de feuilles polymères.

L'invention se rapporte également aux dispositifs mettant en oeuvre le dit procédé.

Le soudage par ultrasons des polymères en feuilles est un procédé connu.

L'on peut se référer, par exemple, aux documents suivants : EP.A.627 300 ; US.3 765 973 ; US.5 476 570 ; US 5 435 863 ; EP.A. 728 570 ; DE 1 454 974.

Lors du soudage par ultrasons, un dégagement de chaleur important se produit de telle sorte que des matériaux sensibles à la chaleur comme le papier ou le carton peuvent présenter des marquages.

Lorsque l'on souhaite souder par ultrasons deux feuilles de polymères comportant à leur voisinage une feuille de papier ou de carton, et que l'on souhaite éviter le marquage, il est connu de modifier certains paramètres de soudage comme la pression appliquée, le temps de soudure, la puissance utilisée, la géométrie de la sonotrode ou de l'enclume.

L'on peut se référer, par exemple, aux documents EP.A.627 300 et WO.84 044 86.

En limitant certains paramètres du soudage par ultrasons, on restreint les possibilités de soudage, en particulier en termes de produits réalisables.

L'invention se rapporte à un procédé de fabrication comportant une étape de soudage par ultrasons ne présentant pas un tel inconvénient.

A cette fin, l'invention concerne, selon un premier aspect, un procédé de fabrication de fournitures de bureau telles que des protège-documents comportant une étape de soudage par ultrasons d'au moins une première feuille de polymère sur une première face d'une deuxième feuille de polymère selon une ligne de soudage, une troisième feuille de polymère étant située, lors du soudage par ultrasons, en regard de la deuxième face de la seconde feuille de polymère, une partie de la troisième feuille de polymère se trouvant à l'aplomb d'au moins une partie de la ligne de soudage prédéterminée de la première et deuxième feuille de polymère, le procédé étant tel que, lors de l'étape de soudage par ultrasons, une feuille de matériau écran se trouve disposée entre la deuxième et la troisième feuille de polymère de telle sorte que la troisième feuille de polymère ne soit pas soudée à la deuxième feuille, lors du soudage de la première feuille sur cette deuxième feuille.

Dans un mode de réalisation, ce matériau écran est un papier sulfurisé.

Dans un autre mode de réalisation, le matériau écran est un papier siliconé.

Les premières, deuxièmes et troisièmes feuilles de polymère peuvent être en polypropylène.

Le procédé peut comprendre une étape de déroulage et de découpe d'un film depuis une première bobine source pour former la troisième feuille de polymère.

Le procédé peut comprendre une étape de déroulage, de découpe, d'un film depuis une deuxième bobine source pour former la feuille de matériau écran.

Le procédé peut comprendre une étape d'association de la troisième feuille de polymère sur la deuxième feuille de polymère, le matériau écran se trouvant positionné entre la deuxième et troisième feuille de polymère.

L'étape d'association de la troisième et de la deuxième feuille de polymère n'est pas postérieure à l'étape de soudage par ultrasons d'au moins une première feuille de polymère sur la deuxième feuille de polymère.

L'association de la deuxième et de la troisième feuille de polymère peut être réalisée par soudage ultrasons.

Le procédé peut comprendre une étape de réalisation d'une multiplicité de premières feuilles de polymère, formant des pochettes aux contours définis par des lignes de soudage, les dites pochettes étant associées entres elles et soudées à la deuxième feuille de polymère par une ligne de soudage ultrasonore formant reliure.

L'invention se rapporte, selon un deuxième aspect, à un dispositif de fabrication de fournitures de bureau telles que des protèges-documents, mettant en oeuvre le procédé présenté ci-dessus, le dispositif comprenant :
- des moyens de découpe d'une deuxième feuille de polymère selon la forme dépliée de la couverture du protège-documents,
- des moyens de pliage, rainage, refoulage de cette deuxième feuille de polymère selon les lignes de pliage définissant le plat et le dos de la couverture du protège-documents,
- des moyens de découpe d'une bande de matériau écran selon la forme d'une étiquette destinée à apparaître au moins partiellement sur le dos du protège-documents,
- des moyens de découpe d'une troisième feuille de polymère selon la forme d'un porte-étiquette pour l'étiquette réalisée en matériau écran,
- des moyens d'association de la troisième feuille de polymère formant porte-étiquette sur la deuxième feuille de polymère formant la couverture du protège-documents, le matériau écran formant l'étiquette se trouvant positionné de manière amovible entre le porte-étiquette et la couverture du protège-documents,
- des moyens de pliage, soudage d'une bande de matériau polymère pour former des pochettes aux contours définis par les lignes de soudage,
- des moyens d'empilement de ces pochettes pour former une multiplicité de premières feuilles de polymère superposées,
- des moyens d'association des pochettes entres elles et de soudage de ces pochettes à la deuxième feuille de polymère formant la couverture du protège-documents, par une ligne de soudage ultrasonore formant reliure.

Le dispositif peut comprendre un carrousel triposte, à savoir :
- un poste à une extrémité d'une unité de déroulage et de découpe de matériau écran formant étiquette,
- un poste à une extrémité d'une unité de déroulage et de découpe de matériau polymère formant le porte-étiquette,
- un poste de transfert et de soudure de l'ensemble porte-étiquette sur la couverture du protège-documents.

D'autres objets et avantages de l'invention apparaîtront lors de la description suivante de modes de réalisation, description qui va être faite en se référant aux dessins annexés dans lesquels :
- la figure 1 est un diagramme représentant la succession des étapes de fabrication de protège-documents, selon un mode de réalisation du procédé selon l'invention,
- la figure 2 est une vue en coupe d'une partie d'un produit élaboré à partir du procédé représenté en figure 1,
- la figure 3 est une vue d'une partie d'un dispositif mettant en oeuvre le procédé représenté en figure 1,
- la figure 4 est une vue en perspective d'un protège-document élaboré selon le procédé représenté en figure 1,
- la figure 5 est une vue du protège-document représenté en figure 4, montré ouvert et posé à plat,
- la figure 6 est une vue de détail montrant le porte-étiquette, l'étiquette, sur le dos de la couverture du protège-document.

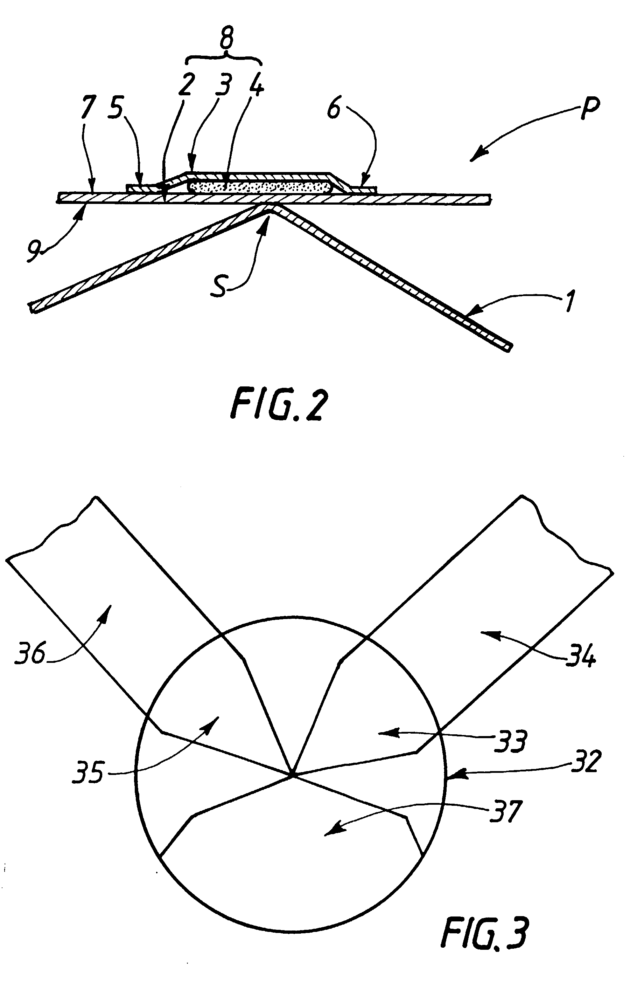

L'on se réfère tout d'abord à la figure 2.

La figure 2 représente une vue en coupe d'une partie d'un produit P élaboré à partir du procédé selon l'invention.

Le produit P comprend une première feuille de polymère 1 soudée par ultrasons selon une ligne S, continue ou discontinue, à une deuxième feuille de polymère 2.

Une troisième feuille de polymère 3 se trouve à l'aplomb d'au moins une partie de la ligne de soudage S.

Une feuille de matériau écran 4 est disposée entre la deuxième feuille de polymère 2 et la troisième feuille de polymère 3.

Les épaisseurs relatives des feuilles 1, 2, 3 et 4 dans la figure 2 ne sont pas respectées, pour des raisons de clarté du dessin.

La troisième feuille de polymère 3 peut être soudée par ultrasons le long des lignes de soudage, continues ou discontinues 5 et 6 à la deuxième feuille de polymère 2.

D'autres moyens d'association de la troisième feuille de polymère 3 sur la face externe 7 de la deuxième feuille de polymère 2 peuvent être envisagés.

L'ensemble 8 formé par la deuxième feuille 2 et la troisième feuille de polymère 3, ainsi que la feuille 4 du matériau écran est assemblé par soudage ultrasons à la première feuille de polymère 1 le long de la ligne S, la feuille 1 étant disposée sur la face interne 9 de la deuxième feuille 2.

Le matériau écran 4 permet d'éviter le soudage de la deuxième feuille 2 et la troisième feuille 3 lors du soudage ultrasons de l'ensemble 8 et de la première feuille 1.

Le matériau 4 ne présente pas, de plus, de marquage issu du dégagement de chaleur lors du soudage ultrasons de l'ensemble 8 et de la feuille 1.

Le matériau écran 4 peut être, un papier sulfurisé ou un papier siliconé, les feuilles de polymère 1, 2, 3 étant en polypropylène.

Le papier sulfurisé peut supporter des écritures manuscrites ou non, réalisés par des moyens conventionnels.

Plusieurs feuilles de polymère 1 peuvent être assemblées simultanément et associées par soudage ultrasons à l'ensemble 8, le long de la ligne de soudage S.

Plusieurs lignes de soudage, parallèles ou non peuvent être réalisées pour associer l'ensemble 8 à la ou aux premières feuilles de polymère 1.

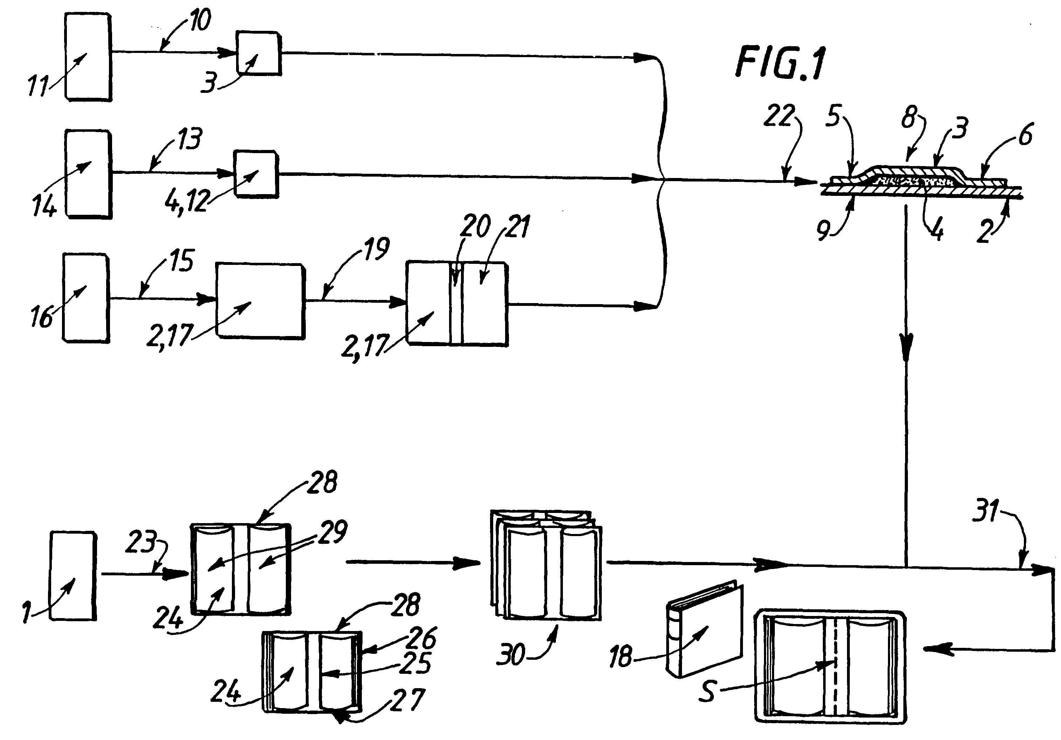

L'on se réfère maintenant à la figure 1.

La figure 1 est un diagramme représentant la succession des étapes de fabrication d'un protège-document, selon un mode de réalisation du procédé selon l'invention.

Tout autre produit qu'un protège-document peut être élaboré, pour autant qu'il comporte un assemblage analogue à celui représenté en figure 2.

Le procédé représenté en figure 1 comprend une étape 10 de déroulage et de découpe d'une troisième feuille de polymère 3 depuis une première bobine source 11.

La découpe est effectuée selon la forme d'un porte-étiquette destiné à protéger une étiquette 12 visible sur le dos du protège-document.

Cette étiquette 12 est réalisée à partir d'une feuille de matériau écran 4, déroulée et découpée dans une étape 13 du procédé, depuis une deuxième bobine source 14.

Le procédé comprend une étape 15 de découpe d'une deuxième feuille de polymère 2 depuis une troisième bobine source 16.

Cette feuille de polymère 2 est découpée selon la forme dépliée de la couverture 17 du protège-document 18.

Cette feuille de polymère 2 est rainée, refoulée ou pliée dans une étape 19 du procédé pour définir le dos 20 et le plat 21 du protège-document 18.

Les étapes 10, 13 d'une part, 15 et 19 d'autre part, sont réalisées en parallèle.

L'ensemble 8 formé par la deuxième feuille 2, la troisième feuille 3 et la feuille de matériau écran 4 disposée entre les feuilles 2, 3, est formé par exemple par soudage ultrasons lors d'une étape 22 du procédé.

Le procédé comporte par ailleurs une étape 23 de découpe, de pliage et soudage d'une bande de matériau polymère pour former des pochettes 24 aux contours 25 et 27 définis par les lignes de soudage et comportant une ouverture 28, ainsi qu'une ligne de pliage ou une zone de soudage 26.

L'on réalise, lors de l'étape 23, des paires 29 de pochettes 24 que l'on empile pour former un ensemble 30 de premières feuilles de polymère 1.

Les paires 29 de pochettes 24 peuvent être formées à partir d'une seule feuille de polymère 1, soudée.

Les paires 29 de pochettes 24 peuvent être formées à partir de deux pochettes, élaborées séparément par soudure de feuilles repliées sur elles-mêmes, un élément intermédiaire étant soudé sur chaque pochette pour lier ces deux pochettes entres elles dans un emplacement correspondant au droit du dos de la couverture du protège-documents.

Cet ensemble 30 est soudé par ultrasons à l'ensemble 8 lors de l'étape 31 du procédé.

Au moins une ligne de soudage S formant reliure pour le protège-document, sépare les paires 29 de pochettes 24 et associe l'ensemble 30 sur la face interne 9 de la deuxième feuille 2.

Lors de l'étape 31 de soudage ultrasons, au moins une partie de la troisième feuille de polymère 3 formant porte-étiquette et au moins une partie de la feuille de matériau écran 4 se trouvent au regard de la ligne de soudage S.

Le matériau écran 4 défini précédemment, permet d'éviter l'adhésion de la troisième feuille 3 et de la deuxième feuille 2 lors du soudage de l'ensemble 30 sur la deuxième feuille 2.

Le matériau écran 4 peut servir directement d'étiquette pour le protège-documents 18.

Le matériau 4 est dépourvu de marquage issu de l'échauffement lors du soudage ultrasonore.

L'on se réfère maintenant à la figure 3.

La figure 3 représente un carrousel triposte faisant partie d'un dispositif mettant en oeuvre le procédé de l'invention, selon un mode de réalisation.

Le carrousel 32 comprend :
- un poste 33 à une extrémité d'une unité 34 de déroulage et de découpe de matériau écran 4 pour former l'étiquette du protège-document 18,
- un poste 35 à une extrémité d'une unité 36 de déroulage et de découpe du matériau polymère formant le porte-étiquette,
- un poste 37 de transfert et de soudure de l'ensemble porte-étiquette sur la couverture 17 du protège-document 18.

Le carrousel 32 permet de réaliser les opérations en temps masqué ou partagé.

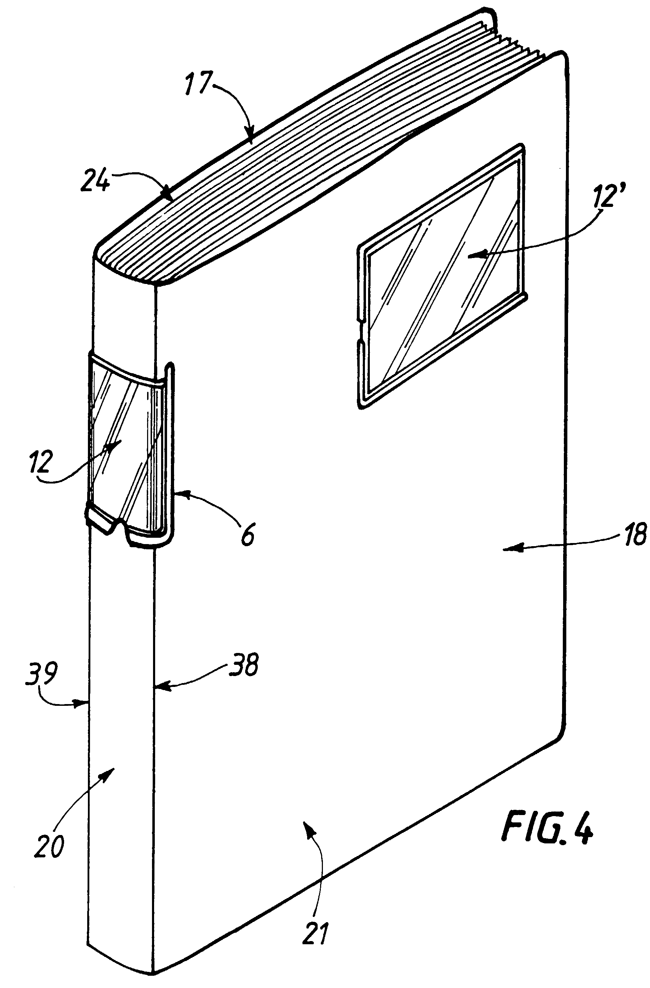

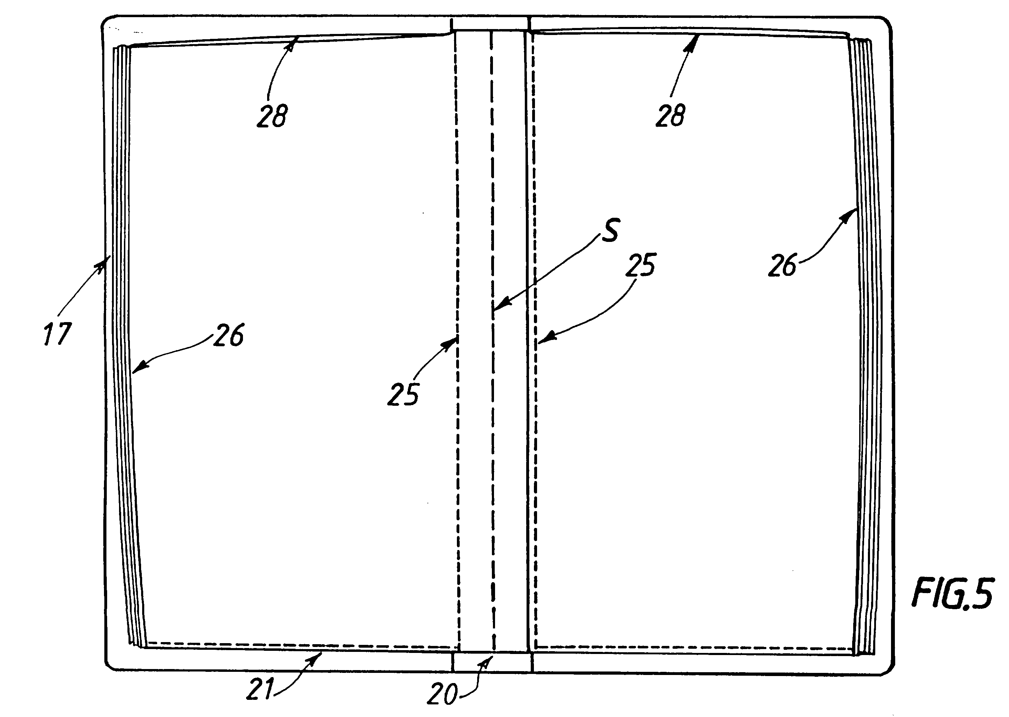

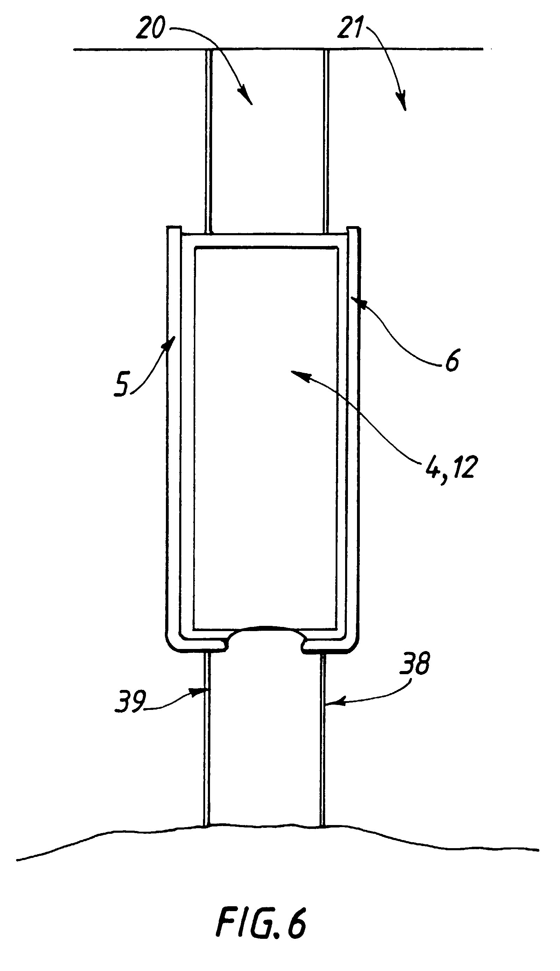

L'on se réfère maintenant aux figures 4 à 6.

Le protège-document 18 comprend une étiquette 12 visible sur le dos 20.

Le protège-document 18 peut comporter également d'autres étiquettes 12', sur le dos 20 ou sur le plat 21.

Les lignes de soudage 5, 6 du porte-étiquette sur la couverture 17 du protège-document peuvent être réalisées sur le dos 20 ou sur le plat 21, c'est à dire en deça ou au delà des lignes de pliages 38, 39 de la couverture 17 définissant le dos 20 du protège-document.

Le porte-étiquette est avantageusement transparent ou translucide, de même que les pochettes 24.

La couverture 17 du protège-document est avantageusement opaque.

La largeur du dos 20 est liée entre autre, au nombre de pochettes 24 prévues.

Le cas échéant, dans le cas d'un grand nombre de pochettes 24, deux ou plus de deux lignes de soudage par ultrasons, parallèles ou non, continues ou non, peuvent être réalisées pour associer l'ensemble 30 des pochettes 24 à l'ensemble 8.

## Revendications

1. Procédé de fabrication de fournitures de bureau telles que des protège-documents, comportant une étape (31) de soudage par ultrasons d'au moins une première feuille de polymère (1) sur une première face (9) d'une deuxième feuille de polymère (2) selon une ligne de soudage (5), une troisième feuille de polymère (3) étant située, lors du soudage par ultrasons, en regard de la deuxième face (7) de la seconde feuille de polymère (2), une partie de la troisième feuille de polymère (3) se trouvant à l'aplomb d'au moins une partie de la ligne de soudage (S) prédéterminée de la première (1) et deuxième feuille de polymère (2), caractérisé en ce que, lors de l'étape de soudage par ultrasons (31), une feuille de matériau écran (4) se trouve disposée entre la deuxième (2) et troisième feuille de polymère (3) de telle sorte que la troisième feuille de polymère (3) ne soit pas soudée à la deuxième feuille (2), lors du soudage de la première feuille (1) sur cette deuxième feuille (2).

2. Procédé selon la revendication 1, caractérisé en ce que le matériau écran (4) est un papier sulfurisé.

3. Procédé selon la revendication 1, caractérisé en ce que le matériau écran (4) est en papier siliconé.

4. Procédé selon la revendication 1, 2 ou 3, caractérisé en ce que les première (1), deuxième (2) et troisième feuille de polymère (3) sont en polypropylène.

5. Procédé selon l'une quelconque des revendications 1 à 4, caractérisé en ce qu'il comprend une étape de déroulage et de découpe (10) d'un film depuis une première bobine source (11) pour former la troisième feuille de polymère (3).

6. Procédé selon la revendication 5, caractérisé en ce qu'il comprend une étape de déroulage et de découpe (13) d'un film depuis une deuxième bobine source (14) pour former la feuille de matériau écran (4).

7. Procédé selon la revendication 6, caractérisé en ce qu'il comprend une étape d'association (22) de la troisième feuille de polymère (3) sur la deuxième feuille de polymère (2), le matériau écran se trouvant positionné entre la deuxième (2) et troisième feuille de polymère (3).

8. Procédé selon la revendication 7, caractérisé en ce que l'étape d'association (22) de la troisième (3) et la deuxième feuille de polymère (2) n'est pas postérieure à l'étape de soudage par ultrasons (31) d'au moins une première feuille de polymère (1) sur la deuxième feuille de polymère (2).

9. Procédé selon la revendication 7 ou 8, caractérisé en ce que l'association de la troisième (3) et de la deuxième feuille de polymère (2) est réalisée par soudage ultrasons.

10. Procédé selon la revendication 9, caractérisé en ce qu'il comprend une étape (23) de réalisation d'une multiplicité de premières feuilles de polymère (1), formant des pochettes (24) aux contours (25, 26, 27) définis par des lignes de soudage, les dites pochettes (24) étant associées entres elles et soudées à la deuxième feuille de polymère (2) par une ligne de soudage ultrasonore (S) formant reliure.

11. Dispositif de fabrication de fournitures de bureau telles que protège-documents mettant en oeuvre le procédé présenté dans les revendications précédentes, caractérisé en ce qu'il comprend :
- des moyens de découpe d'une deuxième feuille de polymère (2) selon la forme dépliée de la couverture (17) du protège-documents (18),
- des moyens de pliage, rainage, refoulage de cette deuxième feuille de polymère (2) selon les lignes de pliage définissant le plat (21) et le dos (20) de la couverture (17) du protège-documents (18),
- des moyens de découpe d'une bande de matériau écran (4) selon la forme d'une étiquette (12) destinée à apparaître au moins partiellement sur le dos (20) du protège-documents (18),
- des moyens de découpe d'une troisième feuille de polymère (3) selon la forme d'un porte-étiquette pour l'étiquette (12) réalisée en matériau écran (4),
- des moyens d'association de la troisième feuille de polymère (3) formant porte-étiquette sur la deuxième feuille de polymère (2) formant la couverture (17) du protège-documents (18), le matériau écran (4) formant l'étiquette (12) se trouvant positionné de manière amovible entre le porte-étiquette et la couverture (17) du protège-documents (18),
- des moyens de pliage, soudage d'une bande de matériau polymère pour former des pochettes (24) aux contours (25, 26, 27) définis par les lignes de soudage,
- des moyens d'empilement de ces pochettes (24) pour former une multiplicité (30) de premières feuilles de polymère (1) superposées,
- des moyens d'association des pochettes (24) entres elles et de soudage de ces pochettes (24) à la deuxième feuille de polymère (2) formant la couverture (17) du protège-documents (18), par une ligne de soudage ultrasonore (S) formant reliure.

12. Dispositif selon la revendication 11, caractérisé en ce qu'il comprend un carrousel triposte (32), à savoir :
- un poste (33) à une extrémité d'une unité (34) de déroulage et de découpe de matériau écran (4) formant étiquette (12),
- un poste (35) à une extrémité d'une unité (36) de déroulage et de découpe de matériau polymère formant le porte-étiquette,
- un poste (37) de transfert et de soudure de l'ensemble porte-étiquette sur la couverture (17) du protège-documents (18).

## Patentansprüche

1. Herstellungsverfahren von Bürobedarfsartikeln wie beispielsweise Unterlagen-Schutzhüllen, mit einer Ultraschall-Schweißetappe (31) mindestens eines Polymerbogens (1) auf einer ersten Seite (9) eines zweiten Polymerbogens (2) bei einer Schweißlinie (S), wobei ein dritter Polymerbogen (3) bei der Ultraschallschweißung gegenüber der zweiten Seite (7) des zweiten Polymerbogens (2) angeordnet ist, wobei sich ein Teil des dritten Polymerbogens (3) lotrecht zu mindestens einem Teil der vom ersten (1) und zweiten (2) Polymerbogen vorgegebenen Schweißlinie (S) befindet, dadurch gekennzeichnet, dass bei der Ultraschall-Schweißetappe (31) ein Bogen aus Abschirmungsmaterial (4) zwischen dem zweiten (2) und dritten (3) Polymerbogen angeordnet ist, so dass der dritte Polymerbogen (3) beim Schweißen des ersten Bogens (1) auf dem zweiten Bogen (2) nicht mit diesem verschweißt wird.

2. Verfahren nach Anspruch 1, dadurch gekennzeichnet, dass das Abschirmungsmaterial (4) ein Pergamentpapier ist.

3. Verfahren nach Anspruch 1, dadurch gekennzeichnet, dass das Abschirmungsmaterial (4) ein Silikonpapier ist.

4. Verfahren nach Anspruch 1, 2 oder 3, dadurch gekennzeichnet, dass der erste (1), zweite (2) und dritte Polymerbogen (3) aus Polypropylen sind.

5. Verfahren nach einem der Ansprüche 1 bis 4, dadurch gekennzeichnet, dass es eine Abwicklungs- und Ausstanzetappe (10) einer Folie ab einer ersten Quellenrolle (11) umfasst, um den dritten Polymerbogen (3) zu bilden.

6. Verfahren nach Anspruch 5, dadurch gekennzeichnet, dass es eine Abwicklungs- und Ausstanzetappe (13) einer Folie ab einer zweiten Quellenrolle (14) umfasst, um den Bogen aus Abschirmungsmaterial (4) zu bilden.

7. Verfahren nach Anspruch 6, dadurch gekennzeichnet, dass es eine Verbindungsetappe (22) des dritten Polymerbogens (3) mit dem zweiten Polymerbogen (2) umfasst, wobei das Abschirmungsmaterial zwischen dem zweiten (2) und dem dritten Polymerbogen (3) angeordnet ist.

8. Verfahren nach Anspruch 7, dadurch gekennzeichnet, dass die Verbindungsetappe (22) des dritten (3) und des zweiten Polymerbogens (2) nicht später stattfindet als die Ultraschall-Schweißetappe (31) zumindest eines ersten Polymerbogens (1) auf dem zweiten Polymerbogen (2).

9. Verfahren nach Anspruch 7 oder 8, dadurch gekennzeichnet, dass die Verbindung des dritten (3) und des zweiten Polymerbogens (2) durch Ultraschall-Schweißung erfolgt.

10. Verfahren nach Anspruch 9, dadurch gekennzeichnet, dass es eine Etappe (23) für die Herstellung einer Vielzahl von ersten Polymerbögen (1) umfasst, die Taschen (24) mit von den Schweißlinien definierten Konturen (25, 26, 27) bilden, wobei die besagten Taschen (24) miteinander verbunden und am zweiten Polymerbogen (2) über eine Ultraschall-Schweißlinie S verbunden sind, die einen Einband bildet.

11. Herstellungsvorrichtung von Bürobedarfsartikeln, wie beispielsweise Unterlagen-Schutzhüllen, durch Umsetzung des in den vorstehenden Ansprüchen beschriebenen Verfahrens, dadurch gekennzeichnet, dass sie folgende Mittel umfasst:
- Ausstanzmittel eines zweiten Polymerbogens (2) nach der entfalteten Form des Deckels (17) der Unterlagen-Schutzhülle (18),
- Falz- und Rillungsmittel dieses zweiten Polymerbogens (2) nach den Falzlinien, die die Fläche (2) und den Rücken (20) des Deckels (17) der Unterlagen-Schutzhülle (18) definieren.
- Ausstanzmittel eines Abschirmungsmaterialstreifens (4) nach der Form eines Etiketts (12), das zumindest teilweise auf dem Rücken (20) der Unterlagen-Schutzhülle (18) erscheinen soll,
- Ausstanzmittel eines dritten Polymerbogens (3) nach der Form eines Etikettenträgers für das Etikett (12) aus Abschirmungsmaterial (4),
- Verbindungsmittel des dritten Polymerbogens (3), der auf dem zweiten Polymerbogen (2) einen Etikettenträger bildet, der den Deckel (17) der Unterlagen-Schutzhülle (18) bildet, wobei das das Etikett (12) bildende Abschirmungsmaterial (4) herausnehmbar zwischen dem Etikettenträger und dem Deckel (17) der Unterlagen-Schutzhülle (18) angeordnet ist.
- Falz-/Schweißmittel eines Polymerstreifens zur Bildung der Taschen (24) mit den von den Schweißlinien definierten Konturen (25, 26, 27),
- Aufstaplungsmittel dieser Taschen (24), um eine Vielzahl (30) von übereinander angeordneten ersten Polymerbögen (1) zu bilden,
- Verbindungsmittel der Taschen (24) miteinander und Schweißmittel dieser Taschen (24) am zweiten Polymerbogen (2), der über eine den Einband bildenden Ultraschall-Schweißlinie S den Deckel (17) der Unterlagen-Schutzhülle (18) bildet.

12. Vorrichtung nach Anspruch 11, dadurch gekennzeichnet, dass sie ein Dreiposten-Karussell (32) umfasst, und zwar mit:
- einem Posten (33) an einem Ende einer Abwicklungs- und Ausstanzeinheit (34) des das Etikett (12) bildenden Abschirmungsmaterials (4),
- einem Posten (35) an einem Ende einer Abwicklungs- und Ausstanzeinheit des den Etikettenträger bildenden Polymermaterials,
- einem Transfer- und Schweißposten (37) der Etikettenträgereinheit auf dem Deckel (17) der Unterlagen-Schutzhülle (18).

## Claims

1. A method of manufacturing office supplies such as document holders, including a step (31) of ultrasonic welding of at least a first sheet of polymer (1) to a first face (9) of a second sheet of polymer (2) along a welding line (S), a third sheet of polymer (3) being situated, during the ultrasonic welding, opposite the second face (7) of the second sheet of polymer (2), part of the third sheet of polymer (3) being situated vertically in line with at least part of the predetermined welding line (S) of the first (1) and second (2) sheets of polymer, characterised in that, during the ultrasonic welding step (31), a sheet of screening material (4) is disposed between the second (2) and third (3) sheets of polymer so that the third sheet of polymer (3) is not welded to the second sheet (2), during the welding of the first sheet (1) to this second sheet (2).

2. A method according to Claim 1, characterised in that the screening material (4) is a sulphurised paper.

3. A method according to Claim 1, characterised in that the screening material (4) is a silicone-coated paper.

4. A method according to Claim 1, 2 or 3, characterised in that the first (1), second (2) and third (3) sheets of polymer are made from polypropylene.

5. A method according to any one of Claims 1 to 4, characterised in that it comprises a step of unwinding and cutting (10) a film from a first source reel (11) in order to form the third sheet of polymer (3).

6. A method according to Claim 5, characterised in that it comprises a step of unwinding and cutting (13) a film from a second source reel (14) in order to form the sheet of screening material (4).

7. A method according to Claim 6, characterised in that it comprises a step (22) of associating the third sheet of polymer (3) with the second sheet of polymer (2), the screening material being positioned between the second (2) and third (3) sheets of polymer.

8. A method according to Claim 7, characterised in that the step (22) of connecting the third (3) and second (2) sheets of polymer is not subsequent to the step of ultrasonic welding (31) of at least a first sheet of polymer (1) to the second sheet of polymer (2).

9. A method according to Claim 7 or 8, characterised in that the association of the third (3) and second (2) sheets of polymer is effected by ultrasonic welding.

10. A method according to Claim 9, characterised in that it comprises a step (23) of producing a multiplicity of first sheets of polymer (1), forming pockets (24) whose contours (25, 26, 27) defined by welding lines, the said pockets (24) being connected to each other and welded to the second sheet of polymer (2) by an ultrasonic welding line (S) forming a binding.

11. A device for manufacturing office supplies such as document holders using the method presented in the preceding claims, characterised in that it comprises:
- means of cutting a second sheet of polymer (2) according to the opened-up shape of the cover (17) of the document holder (16),
- means of folding, forming a groove in and turning back this second sheet of polymer (2) along the folding lines defining the flat (21) and the spine (20) of the cover (17) of the document holder (18),
- means of cutting out a strip of screening material (4) according to the shape of a label (12) intended to appear at least partially on the spine (20) of the document holder (18),
- means of cutting out a third sheet of polymer (3) according to the shape of a label holder for the label (12) produced from screening material (4),
- means of connecting the third sheet of polymer (3) forming a label holder to the second sheet of polymer (2) forming the cover (17) of the document holder (18), the screening material (4) forming the label (12) being positioned removably between the label holder and the cover (17) of the document holder (18),
- means of folding and welding a strip of polymer material in order to form pockets (24) whose contours (25, 26, 27) are defined by the welding lines,
- means of stacking these pockets (24) in order to form a multiplicity (30) of first sheets of polymer (1) placed on top of each other,
- means of connecting the pockets (24) to each other and welding these pockets (24) to the second sheet of polymer (2) forming the cover (17) of the document holder (18), by an ultrasonic welding line S forming a binding.

12. A device according to Claim 11, characterised in that it comprises a three-station carousel (32), namely:
- a station (33) at one end of a unit (34) for unwinding and cutting screening material (4) forming labels (12),
- a station (35) at one end of a unit (36) for unwinding and cutting polymer material forming the label holder,
- a station (37) for transferring and welding the label-holder assembly to the cover (17) of the document holder (18).
